Europäisches Patentamt

European Patent Office

Office européen des brevets

(11) Publication number: **0 457 402 A1**

# (12) EUROPEAN PATENT APPLICATION

(21) Application number: **91201122.8**

(22) Date of filing: **09.05.91**

(51) Int. Cl.⁵: **B01D 53/04**, B01D 53/08,
B01J 8/02, B01J 8/12

(30) Priority: **15.05.90 NL 9001138**

(43) Date of publication of application:
**21.11.91 Bulletin 91/47**

(84) Designated Contracting States:
**AT BE DE FR GB NL SE**

(71) Applicant: **Stork Ketels B.V.**
**Industrieplein 1**
**NL-7553 LL Hengelo(NL)**

(72) Inventor: **van Duinen, Kees**
**Freudstraat 38**
**NL-7555 MH Hengelo(NL)**

(74) Representative: **Prins, Hendrik Willem et al**
**Octrooibureau Arnold & Siedsma**
**Sweelinckplein, 1**
**NL-2517 GK The Hague(NL)**

(54) **Gas duct with cleaning unit.**

㊼ The invention relates to a duct provided with a cleaning unit comprising a number of connected cleaning sections which extend transversely in the duct and which are constructed from perforated plates lying at mutual intervals between which granular cleaning material is arranged, wherein the passage for a gas flowing through the duct along the cleaning sections decreases on the inflow side of the cleaning unit and increases on the outflow side of the cleaning unit, wherein cleaning sections are provided on longitudinal edges with feed channels and/or discharge channels for cleaning material, and to a cleaning unit therefor.

FIG.1

The present invention relates to a gas duct provided with a cleaning unit, with which pollutants can be removed from a gas flowing through the duct. The invention relates in particular to a duct through which flow waste gases which may contain sulphur oxides, nitrogen oxides, hydrochloric acid, mercury, dioxin and the like. These waste gases originate for example from electricity generating stations, heat and power plants, waste incinerating installations and the like.

For removing or, where appropriate, converting these pollutants the cleaning unit contains a specific granular cleaning material that can act as cleaning material, surface-active substance and/or catalyst. Through contact of the waste gas with this specific, granular cleaning material the pollutants are separated, bonded or converted.

The waste gas flowing through the duct can generally have a temperature of between 70 and 300° C, wherein the flow rate can lie between 50 and 600 Nm$^3$/sec. The flow speed of the waste gas in such ducts is in the order of 10 to 15 m/sec.

Until now the cleaning unit for removing pollutants from an waste gas consisted of a bed of cleaning material resting on a grid through which the waste gas flowed. A drawback of such a packed bed of cleaning material is that the options for the configuration of the cleaning unit are limited. One reason for this is that for removing the pollutants from the waste gas the cleaning material and the waste gas have to be in mutual contact for a time. This contact time is defined as the ratio of the thickness of the bed of cleaning material (d) and the gas velocity in the bed of cleaning material (v). If a relatively small bed thickness is chosen, the bed of cleaning material must have a large cross section. If, on the other hand a relatively small cross section is chosen, for example the cross section of the gas duct, then the bed height must be relatively high, whereby the flow resistance over the cleaning unit, and thereby the pressure fall, is great.

The invention has for its object to provide a gas duct with a cleaning unit wherein the configuration of the cleaning unit can be chosen within broad limits, while the above described drawbacks are avoided as far as possible.

In accordance with the invention this is achieved with a gas duct which according to the invention is provided with a cleaning unit which comprises a number of connected cleaning sections which extend transversely in the duct and which are constructed from perforated plates lying at mutual intervals and between which granular cleaning material is arranged, wherein the passage for a gas flowing through the duct decreases on the inflow side of the cleaning unit and increases on the outflow side of the cleaning unit. By using a number of cleaning sections standing at an inclination to the flow direction of the gas a considerably larger section of the cleaning bed is obtained along the length of the cleaning unit, while due to the decreasing passage on the inflow side of the cleaning unit the gas speed remains relatively constant despite the disappearance of gas into the cleaning sections. The gas speed on the other hand likewise remains substantially constant on the downstream side because the increase in the amount of gas leaving the cleaning sections is combined with an enlarging of the passage. Because the gas speed substantially remains constant along the length of the cleaning unit at both the inflow side and the outflow side the pressure difference is likewise substantially constant, thus resulting in a uniform through-flow over the length of the cleaning section, whereby the cleaning material present in the cleaning section is uniformly utilized.

A decrease of the passage on the inflow side is preferably obtained in that the inflow-receiving plates of the cleaning sections enclose an acute angle with the gas flowing through the duct and, conversely, the passage is enlarged on the outflow side because the outflow-receiving plates enclose an acute angle with the gas flowing though the duct. Although the increase and decrease of the passage along the length of the cleaning unit may be exponential or logarithmic, it is however recommended that the increase and decrease are directly proportional.

According to a favourable embodiment of the cleaning unit according to the invention the cleaning sections are adjoining, wherein the inflow-receiving plates of the cleaning sections mutually converge and the outflow-receiving plates mutually diverge.

An optimal construction for the cleaning sections is that wherein the plates of the cleaning section are mutually parallel.

A very favourable cleaning unit is created when the cleaning sections are arranged in the duct in concertina form. A cleaning unit is thus created in transverse direction of the duct which can easily absorb elastic deformations resulting from temperature changes.

For supplying and/or replacing cleaning material it is advantageous for the cleaning sections to be provided on their lengthwise edges with supply channels and/or discharge channels for cleaning material.

If mutually adjoining cleaning sections are preferably provided with a common supply and/or discharge channel for cleaning material the number of supply and/or discharge channels can be limited.

Supplying of cleaning material to the various cleaning sections while the cleaning unit remains in the gas duct can be realized if transporting means for transporting cleaning material are connected to the channel. These transporting means can consist of pneumatic transporting means, that is, tubes can be connected to the cleaning sections wherewith cleaning material can be blown into or out of the cleaning sections. The transporting means can likewise comprise mechanical transporting means such as a screw or a chain with carriers moving through the channels in order to supply or discharge cleaning material.

Another aspect of the invention relates to the cleaning unit itself, which is characterized by a number of connected cleaning sections which are constructed from perforated plates lying at mutual intervals and between which granular cleaning material is arranged, wherein, over the length of the cleaning unit, on the inflow side the passage along the cleaning sections decreases and on the outflow side the passage along the cleaning sections increases.

Mentioned and other features of the gas duct with cleaning unit according to the invention will be elucidated hereinafter on the basis of a number of non-limiting embodiments and with reference to the annexed drawings.

Figures 1, 4 and 7 are each sections through in each case a different embodiment of the cleaning unit according to the invention which is incorporated in a gas duct;

figures 2 and 5 show on a larger scale the respective details II and V from figures 1 and 4 respectively; and

figures 3 and 6 show on a larger scale details III and VI from figures 1 and 4 respectively.

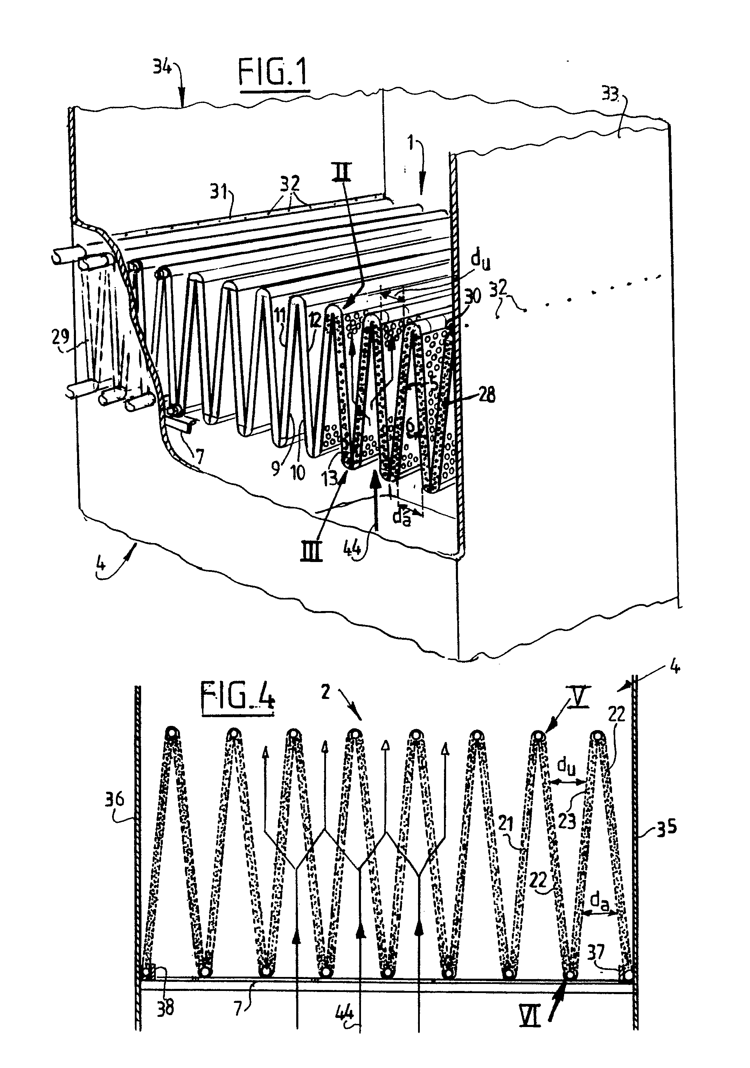

Figure 1 shows a cleaning unit 1 according to the invention which is incorporated in a rectangular gas duct 4. The cleaning unit 1 comprises a number of connected cleaning sections 5, 6 which are joined to each other in concertina form and extend transversely of the gas duct 4, and therein rest on a number of support beams 7.

Each cleaning section 5, 6 is constructed from an inflow-receiving plate 9 and 10 provided with perforations and an outflow-receiving plate 11 and 12. The inflow-receiving plate 9, 10 is parallel to the associated outflow-receiving plate 11, 12 and arranged between these plates 9, 11; 10, 12 is granular cleaning material intended to clean the gas 44 flowing through the gas duct 4.

The inflow-receiving plates 9, 10 enclose an acute angle $\alpha$ with the flow direction 15 of the gas 14 flowing through the gas duct 4, while the outflow-receiving plates 11 and 12 enclose an acute angle $\beta$ with the flow direction 16 of the outflowing gas. Since the inflow plates 9 and 10 and the outflow plates 11 and 12 of the cleaning sections 5 and 6 are mutually parallel, the acute angles $\alpha$ and $\beta$ are equal to each other.

The passage $d_a$ thus decreases on the inflow-receiving side of the wedge-shaped space between the cleaning sections 5 and 6 and in corresponding manner the passage $d_u$ increases on the outflow-receiving side.

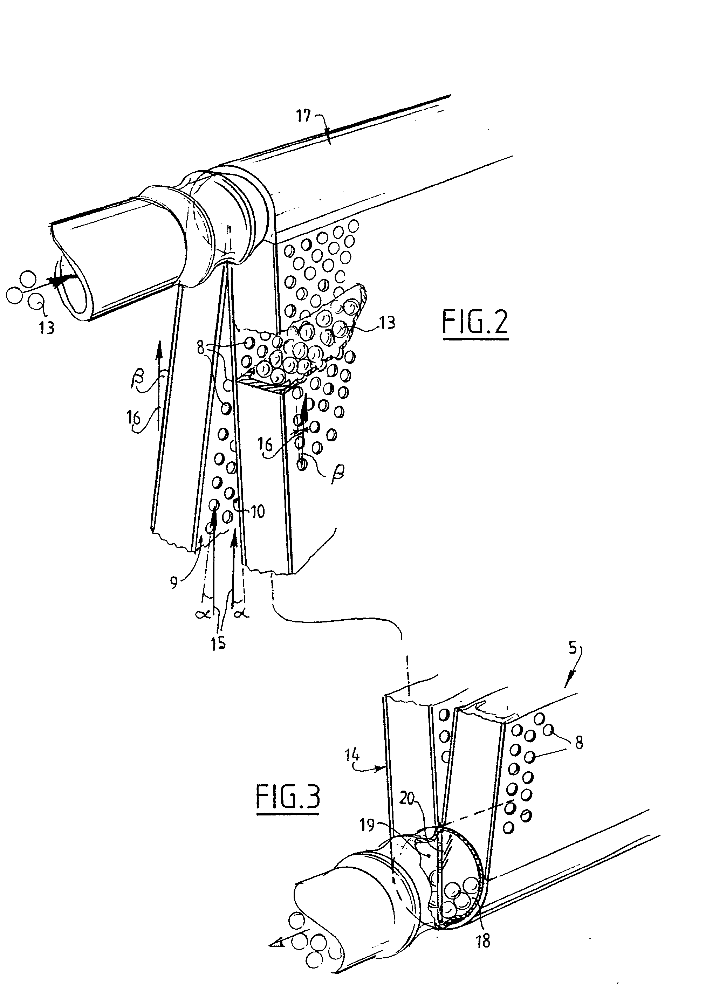

As is shown in more detail in figures 2 and 3 the cleaning sections 5 and 6 are provided with a common feed channel 17 for cleaning material 13, and the cleaning sections 5 and 14 are each provided with a separate discharge channel 18 and 19 respectively which are mutually separated by a partition wall 20. Cleaning material is blown pneumatically in a manner not shown into the feed channel 17 in order to fill the cleaning sections 5, 6, 14 with cleaning material 13. After loading of the cleaning material this material can be removed pneumatically via the discharge channels 18 and 19.

The outermost cleaning sections 28 and 29 are each provided with a flange 30 and 31 respectively which using fastening means 32 are pulled fixedly onto the walls 33 and 34 respectively of the gas duct 4.

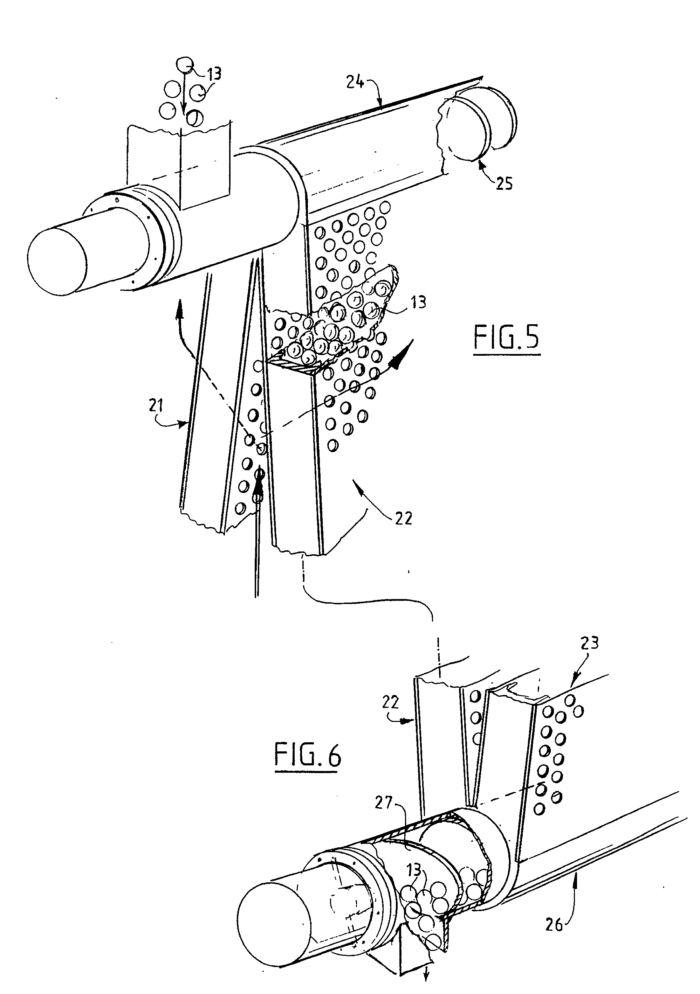

Figures 4-6 show another cleaning unit 2 according to the invention which is constructed from sixteen connected cleaning sections mutually joined in concertina form which substantially have the same configuration as the cleaning sections 5, 6, 14 shown in figures 1-3. The cleaning unit 2 however has a great length in the gas flow direction and a smaller number of cleaning sections are used. The decrease of The passage $d_a$ on the inflow-receiving side and the increase of the passage $d_u$ on the outflow-receiving side of the cleaning unit 2 is smaller in the gas flow direction. Moreover, because of the smaller number of cleaning sections 21-23 at an equal thickness of each cleaning section 21-23, the pressure fall across the cleaning unit 2 is smaller than for the cleaning unit 1.

The cleaning sections 21 and 22 are provided on their common longitudinal edge with a common feed channel 24 for cleaning material 13. Arranged for rotation in this feed channel 24 is a screw 25 with which cleaning material 13 can be transported through the feed channel 24.

In similar manner the cleaning sections 21 and 23 are provided on the inflow-receiving side with a common discharge channel 26 in which a screw 27 is arranged for rotation.

The outer cleaning sections 22 and 35 rest in the respective gutters 37 and 38 fixed on the walls 35 and 36 of the gas duct 4.

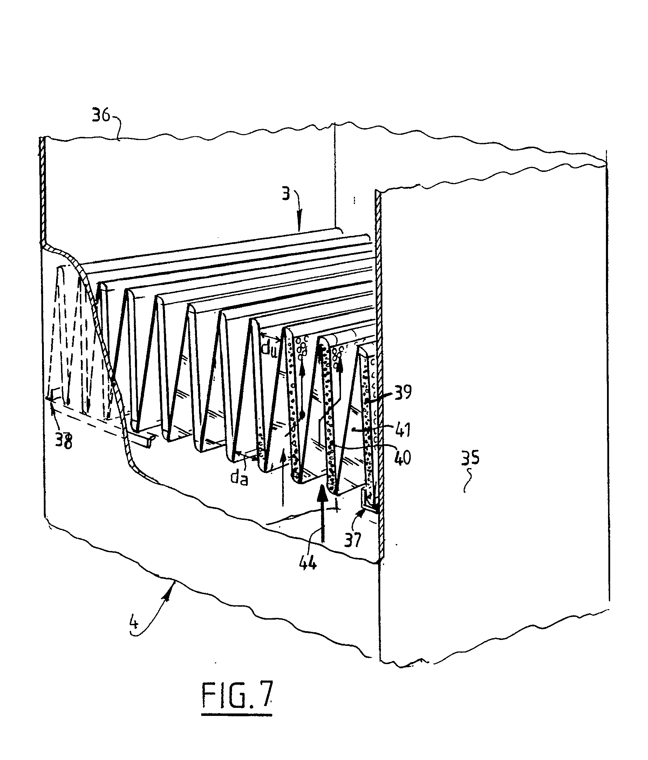

Finally, figure 7 shows another cleaning unit according to the invention wherein a closed wall extends between successive cleaning sections 39, 40. The passage $d_a$ nevertheless decreases on the inflow-receiving side along the length of the cleaning unit 3 and in corresponding manner the passage $d_u$ increases on the outflow-receiving side.

The plates of the cleaning sections can be manufactured of carbon steel or stainless steel and the perforations arranged therein are of a size such that the granular cleaning material 13 cannot pass through these perforations.

The thickness of each cleaning section is in the order of 5-15 cm, and in general 5-10 cm.

In a gas-fired electricity generating station with a capacity of 100 MWe wherein about 140 m³/sec of waste gases are discharged via the gas duct 4, with a gas duct 4 having a length of 4 meters and a width of 4 meters the cleaning unit 16 can contain cleaning sections with a length of 4 meters and a width likewise of 4 meters.

**Claims**

1. Duct provided with a cleaning unit comprising a number of connected cleaning sections which extend transversely in the duct and which are constructed from perforated plates lying at mutual intervals between which granular cleaning material is arranged, wherein the passage for a gas flowing through the duct along the cleaning sections decreases on the inflow side of the cleaning unit and increases on the outflow side of the cleaning unit.

2. Duct as claimed in claim 1, wherein the inflow-receiving plates enclose an acute angle α and the outflow-receiving plates an acute angle β with a flow direction of the gas flowing through the duct.

3. Duct as claimed in claim 1 or 2, wherein the cleaning sections are mutually adjoining and the inflow-receiving plates mutually converge, and the outflow-receiving plates mutually diverge.

4. Duct as claimed in claims 1-3, wherein the plates of a cleaning section are mutually parallel.

5. Duct as claimed in claims 1-4, wherein the cleaning sections are disposed in the duct in a concertina form.

6. Duct as claimed in claims 1-5, wherein cleaning sections are provided on their longitudinal edges with feed channels and/or discharge channels for cleaning material.

7. Duct as claimed in claims 1-6, wherein mutually adjoining cleaning sections are provided with a common feed and/or discharge channel for cleaning material.

8. Duct as claimed in claim 6 or 7, wherein transporting means for transporting cleaning material connect to the channel.

9. Duct as claimed in claim 8, wherein the transporting means comprise pneumatic transporting means.

10. Duct as claimed in claim 8 or 9, wherein the transporting means comprise mechanical transporting means.

11. Cleaning unit for a gas duct as claimed in claims 1-10.

EP 0 457 402 A1

## FIG.1

## FIG.4

5

FIG.2

FIG.3

FIG.5

FIG.6

7

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 873 287  (H.L. BARNEBEY)<br>* column 3, line 11 - column 4, line 26; figure 3B4B *<br>- - - | 1-5,11 | B 01 D 53/04<br>B 01 D 53/08<br>B 01 J 8/02<br>B 01 J 8/12 |
| X | US-A-3 243 942  (V.J. BURKE)<br>* the whole document *<br>- - - | 1-5,11 | |
| X,A | EP-A-0 024 809  (EXXON)<br>* page 25, line 22 - page 29, line 17; figures 5,6 *<br>- - - - - | 1-6,11,7,8 | |

TECHNICAL FIELDS
SEARCHED (Int. Cl.5)

B 01 D
B 01 J

The present search report has been drawn up for all claims

| Place of search | Date of completion of search | Examiner |
|---|---|---|
| The Hague | 22 August 91 | BOGAERTS M.L.M. |